# EUROPEAN PATENT APPLICATION

(11) **EP 2 210 753 A1**
(43) Date of publication of application: **28.07.2010**
(21) Application number: 08851909.5
(22) Date of filing: 18.11.2008
(51) Int. Cl.: B60J 5/06, B60J 1/17, E05F 11/54, E05F 15/14

(54) **DEVICE FOR DRIVING OPENING/CLOSING BODY FOR VEHICLE**

(30) Priority: 22.11.2007 JP 2007303361; 11.01.2008 JP 2008004639
(71) Applicant: Aisin Seiki Kabushiki Kaisha, Kariya-shi, Aichi 448-8650 (JP)
(72) Inventor: TAKEUCHI, Tsutomu, Kariya-shi Aichi 448-8650 (JP); ISHIDA, Toshihiko, Kariya-shi Aichi 448-8650 (JP)
(74) Representative: TBK-Patent
(86) International application number: PCT/JP2008/070913
(87) International publication number: WO 2009/066652

(57) **Abstract**

There is provided a vehicle opening/closing body driving apparatus which allows reduction in the number of components and reduction of cost and which allows application of appropriate tension to a cable. The invention also intends to reduce the workload needed at the time of cable installment and facilitate the installment. The apparatus includes a cable retained to the opening/closing body of the vehicle for opening/closing this opening/closing body, a drive wheel, a drive mechanism for moving the cable back and forth, a guide member for guiding the cable extending from the opening/closing body to the drive wheel and further guiding the cable past the drive wheel back to the opening/closing body, a support member for supporting either the guide member or the drive wheel and a tension applying member affixed to the support member and configured to apply a tension to the cable.

## Description

### Technical Field

The present invention relates to an opening/closing body driving apparatus for a vehicle configured to drive an opening/closing body provided in a vehicle. More particularly, the invention relates to a vehicle opening/closing body driving apparatus including a cable retained to an opening/closing body provided in a vehicle for opening/closing this opening/closing, a drive wheel about which the cable is wound and adapted for moving the cable back and forth according to its rotational direction, and a drive unit having a guide member for guiding the cable extending from the opening/closing body to the drive wheel and guiding the cable past the drive wheel again to the opening/closing body.

### Background Art

Conventionally, as a driving apparatus for an opening/closing body in a vehicle provided for opening/closing a sliding door provided in a lateral face of the vehicle, there is known an apparatus including a cable having opposed terminal ends thereof retained to the sliding door, a drive wheel about which an intermediate length portion of the cable is wound, the drive wheel moving the slide door back and forth according to its rotational direction, and a drive motor for driving the drive wheel. With such opening/closing body driving apparatus for a vehicle, in order to allow an opening driving operation and a closing driving operation of the sliding door to be effected normally, there is provided a tension mechanism for constantly applying an appropriate tension to the cable.
Further, with such opening/closing body driving apparatus for a vehicle, there is also provided a foreign object entrapment detecting mechanism for detecting a foreign object such as a passenger, a passenger's baggage, etc. being stuck or entrapped by the opening/closing body in the course of an opening/closing drive of the opening/closing body and then stopping or moving the opening/closing body in reverse.

An example of the above-described tension mechanism is disclosed in Patent Document 1. In this tension mechanism, tension pulleys are engaged, from the outside, on a pull-in cable to pulled from a guide rail toward an outer peripheral surface of the drive wheel and on a pay-out cable to be paid out from the outer peripheral surface of the drive wheel toward the guide rail, respectively. These tension pulleys are configured to be slidable inside a common tension case and a coil spring is provided between and across the two tension pulleys, so that the coil spring urges these pulleys in the direction approaching each other, thereby to apply tensions to the cables.

Further, the above-described Patent Document 1 discloses, as a mechanism for adjusting initial tension of the vehicle opening/closing body driving apparatus, a mechanism utilizing a vertically elongate slot formed in a base plate. With this mechanism, when the vehicle opening/closing body driving apparatus is to be assembled with and mounted in the vehicle and the cable is to be installed, first, the tension case will be fixed in position in close vicinity of the drive wheel, with utilizing an amount of play provided by the slot and the cable will be temporarily installed under a partially slackened state. Thereafter, upon release of the temporary fixing, the drive wheel will fall by its own weight, thus applying an appropriate tension to the cable.

An example of the foreign object entrapment detecting mechanism described above is disclosed in Patent Document 2. In this, a contact sensor is provided along a terminal face of the sliding door. When a contact is detected by this contact sensor, this is detected as entrapment of a foreign object.

Patent Document 3 discloses another example of the tension mechanism for applying a tension to a cable retained to a sliding door of a vehicle. This tension mechanism includes a pivotally supported tension arm and a tension pulley mounted on a leading end of the tension arm for guiding the cable. As the tension arm is pivoted, the path length of the cable is varied correspondingly thereto. There is also provided a spring member for urging this tension arm toward the path length increasing side, thus applying a tension to the cable. In this tension mechanism, a limit switch is provided in the tension pulley, and on a path of movement of the limit switch associated with pivotal movement of the tension arm, an activating member for activating the limit switch is provided. In operation, if the sliding door has entrapped a foreign object and the tension of the cable changes according thereto, the tension arm is pivoted. And, when the pivoting amount of the tension arm reaches a predetermined amount, the limit switch comes into contact with the activating member, whereby the limit switch is activated, thus detecting the entrapment of the foreign object
Patent Document 1: Japanese Patent No. 3403079
Patent Document 2: Japanese Patent Application "Kokai" No. 9-264094
Patent Document 3: Japanese Patent Application "Kokai" No. 10-226461

### Disclosure of the Invention

With the vehicle opening/closing body driving apparatus, it is desired as a matter of course that no slackness should occur in the cable. In addition, it is desired also that the number of components constituting the drive unit should be as few as possible and the installment of the cable inside the drive unit should be easy.

In the above respects, in the case of the vehicle opening/closing body driving apparatus disclosed in Patent Document 1, the mechanism for appropriately maintaining the cable tension and the mechanism for adjusting the initial tension to be applied at the time of installment of the cable are provided as separate components. So, the number of components is large and the production cost is high. Further, the operation for installing the cable is troublesome since this involves fastening nuts while adjusting the height position of the tension case and loosening the nuts again after completion of the cable installment.

In the case of the entrapment detecting mechanism disclosed in Patent Document 2, the detection of foreign object entrapment is limited to the position where the contact sensor is provided. Therefore, if a foreign object is entrapped without coming into contact with the contact sensor, this cannot be detected.

On the other hand, in the case of the entrapment detecting mechanism disclosed in Patent Document 3, entrapment of foreign object is detected based on a change in the cable tension. This is advantageous in that the entrapment detection is possible regardless of the location of the entrapment. However, this mechanism requires the limit switch and the activating member for activating the limit switch, thus increasing the number of components again. Further, there is a need to secure a space for allowing the pivotal movement of the tension arm. This makes it difficult to form the mechanism compact.

The present invention has been made in view of the above-described state of the art. An object of the invention is provide a driving apparatus for an opening/closing body in a vehicle, which apparatus allows reduction in the number of components, thus reducing the cost and allows also application of appropriate tension to the cable. A further object of the invention is to reduce the amount of workload needed at the time of cable installment and to facilitate the cable installment work. A still further object is to provide a vehicle opening/closing body driving apparatus which includes a foreign object entrapment detecting mechanism capable of reliable detection of entrapment of a foreign object, yet which apparatus is formed compact.

For accomplishing the above-noted object, according to the characterizing feature of a driving apparatus for an opening/closing body in a vehicle relating to the present invention, the apparatus comprises:
a cable retained to the opening/closing body of the vehicle for opening/closing this opening/closing body;
a drive wheel;
a drive mechanism for moving the cable back and forth;
a guide member for guiding the cable extending from the opening/closing body to the drive wheel and further guiding the cable past the drive wheel back to the opening/closing body;
a support member for supporting either the guide member or the drive wheel; and
a tension applying member affixed to the support member and configured to apply a tension to the cable.

With the above-described construction, when the drive mechanism moves back and forth the cable retained to the opening/closing body thereby to open/close this opening/closing body, the tension applying member applies a tension on this cable. So, the tension of the cable may be maintained appropriately and slackness thereof can be prevented.
Further, the tension applying member is affixed to the support member that supports either the guide member or the drive wheel provided in the vehicle opening/closing body driving apparatus. Therefore, during installment of the tension mechanism, there is no need for any special positioning thereof, separately from that of the guide member or the drive wheel. As a result, the assembly may be facilitated.

In the above, preferably, the tension applying member comprises a blade spring.

With the above-described construction, by displacing the blade spring in the direction for reducing the cable tension, the initial tension used at the time of cable installment can be adjusted very easily. Hence, the cable installment may be further facilitated. Moreover, since the mechanism for adjusting the initial tension can be integrated with the mechanism for appropriately maintaining the cable tension, it is possible to further reduce the number of components, thus further reducing the production cost.

In the above, preferably, the blade spring is affixed on the inner side of the cable wound about the guide member and the drive wheel, so as to urge the cable to the outer side.

With the above construction, from the inner side of the cable wound around and between the guide member and the drive wheel, a tension to the outer side can be applied reliably to the cable via the blade spring.
Further, since the blade spring and the other member formed or provided continuous therewith can altogether be accommodated on the inner side of the wound cable. Therefore, if the blade spring is affixed to the direction for reducing the cable tension, that is, under a condition of being displaced further inwards than the wound cable, the cable can be installed simply by winding the slackened cable around this displaced blade spring. As a result, the cable installment can be even further facilitated.

Moreover, preferably, at an end of the blade spring to which end the support member is not affixed, there is pivotally supported a tension pulley for guiding the cable.

With this construction, since a tension pulley is pivotally supported to the end of the blade spring to which end the support member is not affixed, the tension pulley is pivoted about an axis with the blade spring applying an appropriate tension to the cable, so that the cable retained to the opening/closing body of the vehicle can be moved back and forth in a smooth manner.

Preferably, at an end of the blade spring to which end the support member is not affixed, there is formed a curved portion which is curved in the direction opposite to the tension applying direction, and on the outer side of the curved portion, there is formed a guide groove for guiding the cable to the outer side of the curved portion.

With this construction, since a guide groove for guiding the cable to the outer side of the curved portion is formed on the outer side of the curved portion, the cable will be caused to slide along the guide groove with the blade spring applying an appropriate tension to the cable, so that the cable can be appropriately guided between the guide member and the outer peripheral surface of the drive wheel. In this, since the curved portion is curved in the direction opposite to the tension applying direction, inadvertent hooking trouble of the cable can be effectively restricted.
As described above, with the above-described ingenious designing of the shape of the blade spring, pulling-in and paying-out operations of the cable can be carried out appropriately without using a guide roller or the like. As a result, the number of components can be even further reduced and the product cost can be even further reduced correspondingly.

According to a further characterizing feature of the present invention, the apparatus further comprises a strain gauge included in the tension applying member and configured to detect deformation of this tension applying member.

With the above-described construction, the tension applying member applies a tension to the cable through elastic deformation of this tension applying member per se; whereas, if the tension of the cable is changed, then, this causes elastic deformation of the tension applying member. Therefore, as a strain gauge is provided in the tension applying member to detect its elastic deformation, entrapment of a foreign object can be detected in a reliably manner, based on the resultant change in the cable, regardless of the position of this entrapment.

According to a still further characterizing feature of the present invention, the tension applying member includes a blade spring supported to a support member that supports either the guide member or the drive wheel, the blade spring being configured to apply tension to a pulling-in cable pulled in to the drive wheel and a paying-out cable paid out from the drive wheel.

With the above-described construction, as the tension applying member includes a blade spring, a strain gauge can be easily attached to a planar portion of this blade spring.
Further, since the blade spring is supported to a support member that supports either the guide member or the drive wheel, the blade spring can be fixed in position relative to either the guide member or the drive wheel in a more reliable manner, so the tension can be set to a desired value. As a result, a change, if occurred, in the tension due to foreign object entrapment will become more distinct, so this entrapment can be detected in a reliable manner.

According to a still further characterizing feature of the present invention, the blade spring is supported on the inner side of the cable wound around and between the guide member and the drive wheel.

If the blade spring is supported on the inner side of the cable wound around and between the guide member and the drive wheel as in the above-described construction, the apparatus can be formed compact. Further, since the blade spring and all the components or members formed or provided continuously therewith can be confined on the inner side of the wound cable, the apparatus can be even more compact.

According to a still further characterizing feature of the present invention, the blade spring is configured to urge the pulling-in cable and the paying-out cable to the outer or inner side.

With the above-described construction, when the pulling-in cable and the paying-out cable are urged to the outer side, the cable can be installed from the contacting portion between the blade spring and the cable or from the outer side of the member continuous with the blade spring. On
the other hand, when the pulling-in cable and the paying-out cable are urged to the inner side, a greater length of the cable can be wound about the drive wheel. As a result, slippage of the cable can be effectively prevented, so that the puling-in operation and the paying-out operation of the cable can be carried out reliably.

According to a still further characterizing feature of the present invention, at an end of the blade spring, there is provided a guide wheel for urging and contacting the cable to guide this cable.

With the above-described construction, while the blade spring applies an appropriate tension to the cable, the sliding resistance relative to the cable can be reduced by the guide wheel. As a result, normal variation occurring in the cable tension can be decreased, thus allowing the foreign object entrapment detection to be made in an even more reliable manner.

According to a still further characterizing feature of the present invention, at an end of the blade spring, there is formed a curved portion which is curved in the direction opposite to the tension applying direction, and on the outer side of the curved portion, there is formed a guide groove for guiding the cable to the outer side of the curved portion.

With the above construction, a guide groove for guiding the cable is provided on the outer side of a curved portion which is formed at an end of the blade spring. With this, the pulling-in operation and the paying-out operation of the cable can be carried out appropriately, without using a guide roller or the like. As a result, the number of components can be even further reduced and the apparatus can be formed even more compact.

According to a still further characterizing feature of the present invention, the blade spring is pivotally supported.

With the above-described construction, when e.g. the tension in the pulling-in cable is increased, the tension transmitted from the pulling-in cable to the blade spring causes this blade spring to pivot about the support portion toward the paying-out cable side. With this pivotal movement, a tension is applied also to the paying-out cable. Hence, a difference between the tension on the pulling-in cable and the tension on the paying-out cable can be effectively absorbed by a pivotal movement of the blade spring. In this way, with a pivotal movement of the blade spring, tension difference during normal operations of the opening/closing body can be solved. On the other hand, when the tension of the pulling-in cable is further increased due to foreign object entrapment, the tension difference between the two cables will be increased to case elastic deformation in the blade spring, based on which the foreign object entrapment can be detected. As described above, with the arrangement of pivotally supporting the blade spring, elastic deformation in the blade spring during normal movements of the opening/closing body can be restricted, so that foreign object entrapment can be detected very reliably.

### Brief Description of the Drawings

[Fig. 1] is a side view of a vehicle having a sliding door.
[Fig. 2] is a side view of a vehicle door opening/closing apparatus.
[Fig.3:] is an upper plane view of the vehicle door opening/closing apparatus.
[Fig. 4] is a perspective view of a drive unit.
[Fig. 5] is a front view of the drive unit.
[Fig. 6] is a section view taken along VI-VI in Fig. 5.
[Fig. 7] is a section view taken along VII-VII in Fig. 5.
[Fig. 8] is a schematic view of a drive unit relating to a first embodiment.
[Fig. 9] is a schematic view of foreign object entrapment.
[Fig. 10] is a schematic view of a drive unit relating to a second embodiment.
[Fig. 11] is a schematic view of a drive unit relating to a third embodiment.
[Fig. 12] is a section view taken along XII-XII in Fig. 11.
[Fig. 13] is a schematic view of a drive unit relating to a further embodiment.
[Fig. 14] is a schematic view of a drive unit relating to a further embodiment.
[Fig. 15] is a schematic view of a drive unit relating to a further embodiment.
[Fig. 16] is a schematic view of a drive unit relating to a further embodiment.
[Fig. 17] is a schematic view of a drive unit relating to a further embodiment.

### Best Mode of Embodying the Invention

### [First Embodiment]

A first embodiment of the present invention will now be described with reference to the drawings.

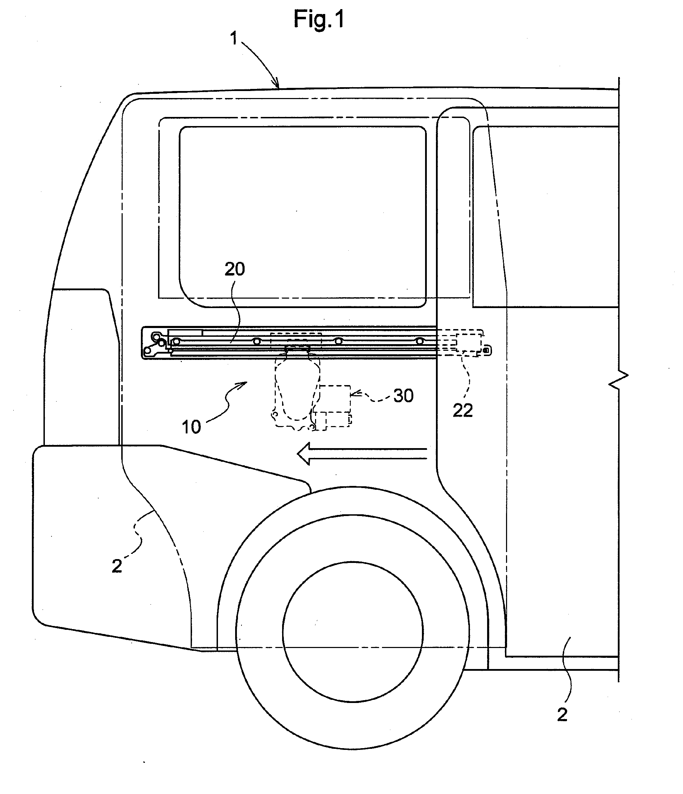

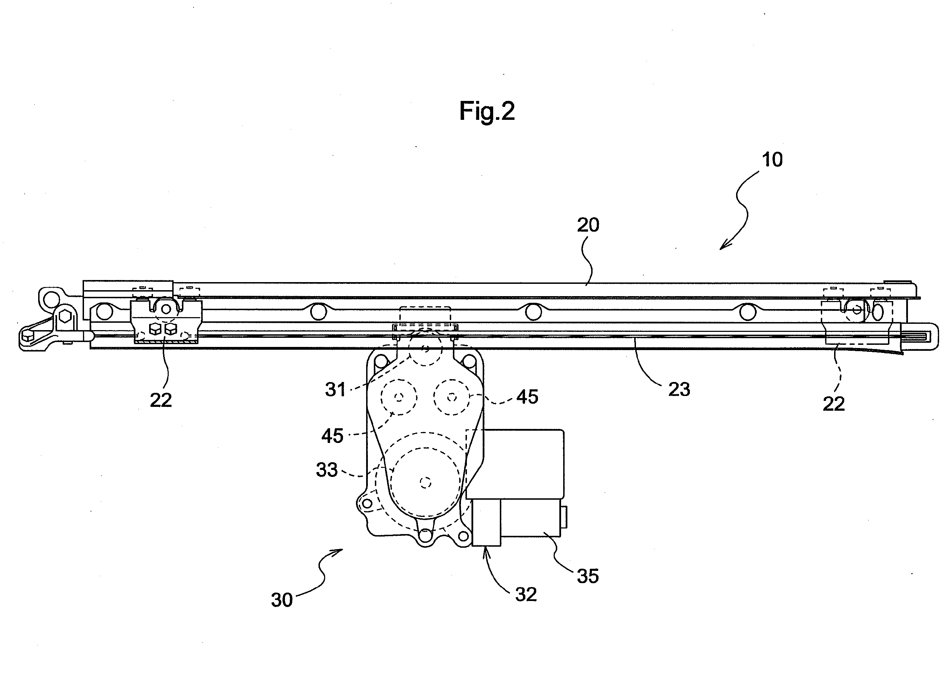

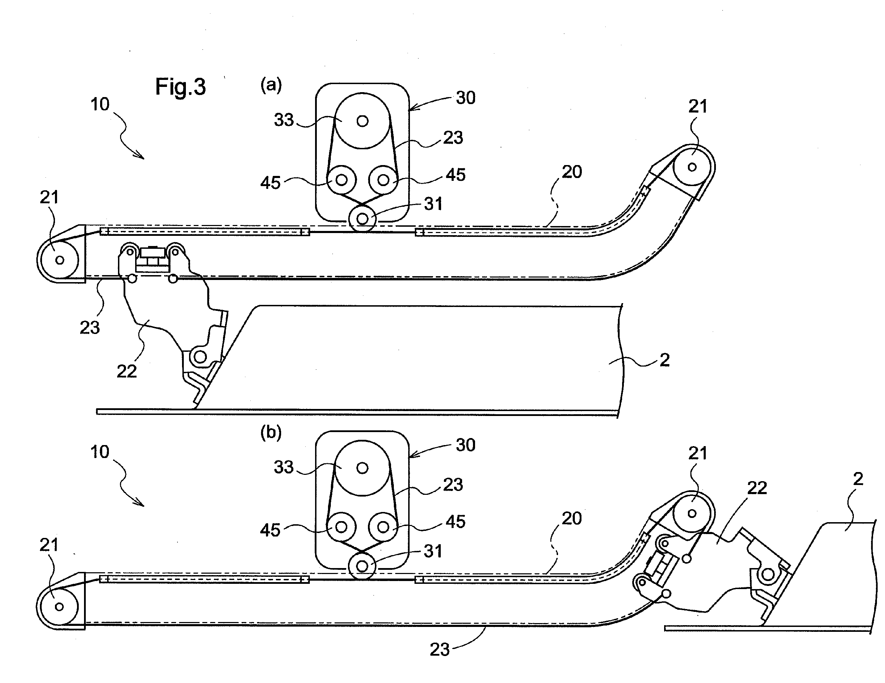

Fig. 1 is a side view of a vehicle 1 having a sliding door 2 as an example of "an opening/closing body". This vehicle 1 includes a vehicle door opening/closing apparatus 10 as an example of "a vehicle opening/closing body driving apparatus" for allowing opening/closing operations of the sliding door 2 to be effected automatically. Fig. 2 is a side view of the vehicle door opening/closing apparatus 10. Fig. 3 is its upper plane view. Incidentally, in Fig. 3, a drive unit 30 is shown schematically, in order to facilitate understanding of operations of this drive unit 30. As shown in these figures, this vehicle door opening/closing apparatus 10 includes a guide rail 20 and the drive unit 30.

The guide rail 20 is disposed at substantially height-wise center portion of the lateral side of the vehicle 1 and the drive unit 30 is suspended from the guide rail 20 at an intermediate portion in the front/rear direction. The sliding door 2 is mounted to be slidable along this guide rail 20. In operation, as the sliding door 2 is moved back and forth substantially parallel with the lateral side of the vehicle 1, the sliding door 2 is opened/closed. Incidentally, in this embodiment, there is shown the arrangement wherein the guide rail 20 is provided at substantially height-wise center portion of the lateral side of the vehicle 1 and the drive unit 30 is suspended from the guide rail 20 at an intermediate portion thereof in the front/rear direction. The invention, however, is not limited to this particular arrangement. For instance, the guide rail 20 may be provided at a lower portion of the lateral side of the vehicle 1 and the drive unit 30 may be suspended form the front side or rear side of the guide rail 20.

At opposed terminal ends of the guide rail 20, two fixed pulleys 21 are supported to be rotatable about respective axes extending along the height of the vehicle 1 and a length of cable 23 is engaged with and wound and turned around these fixed pulleys 21, and opposed terminal ends of the cable 23 are retained to a bracket 22, so that the cable 23 is disposed in the form of a loop around the guide rail 20.

To the portion of the bracket 22 on the outer side of the rail, the sliding door 2 is supported to be pivotable about an axis extending along the height of the vehicle 1. With this, the sliding door 2 is moved back and forth between a full open position (Fig. 3 (a)) and a full closed position (Fig. 3 (b)). When the sliding door 2 is fully closed, that is, when the bracket 22 is moved to the curved terminal end of the guide rail 20, the sliding door 2 is pivoted so that the sliding door 2 becomes aligned flush with the lateral face of the vehicle 1.

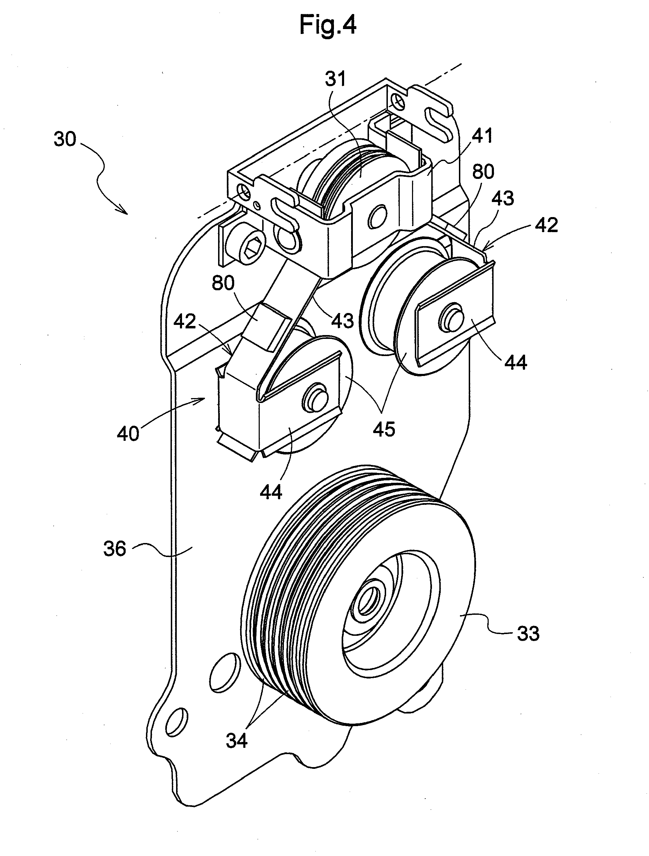

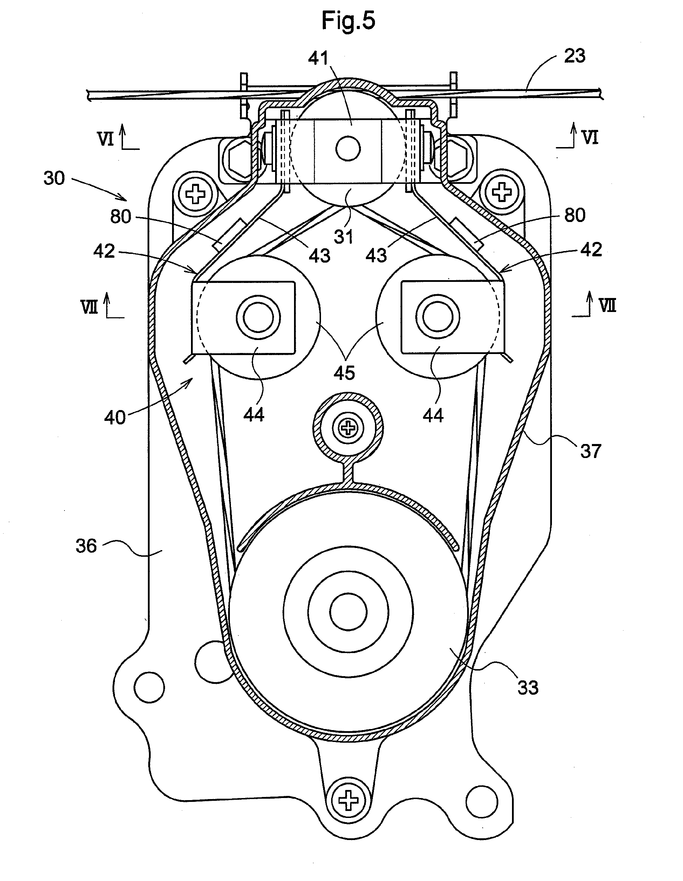

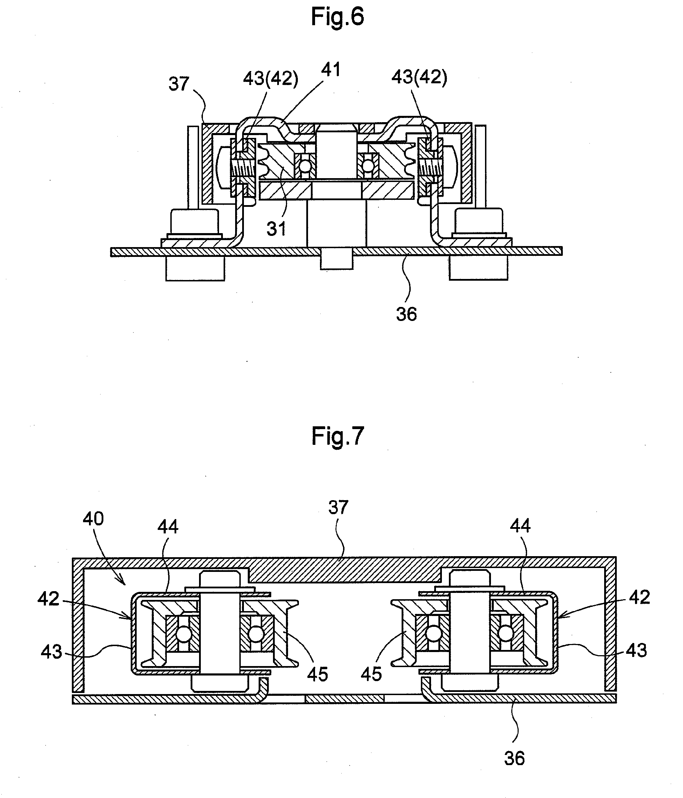

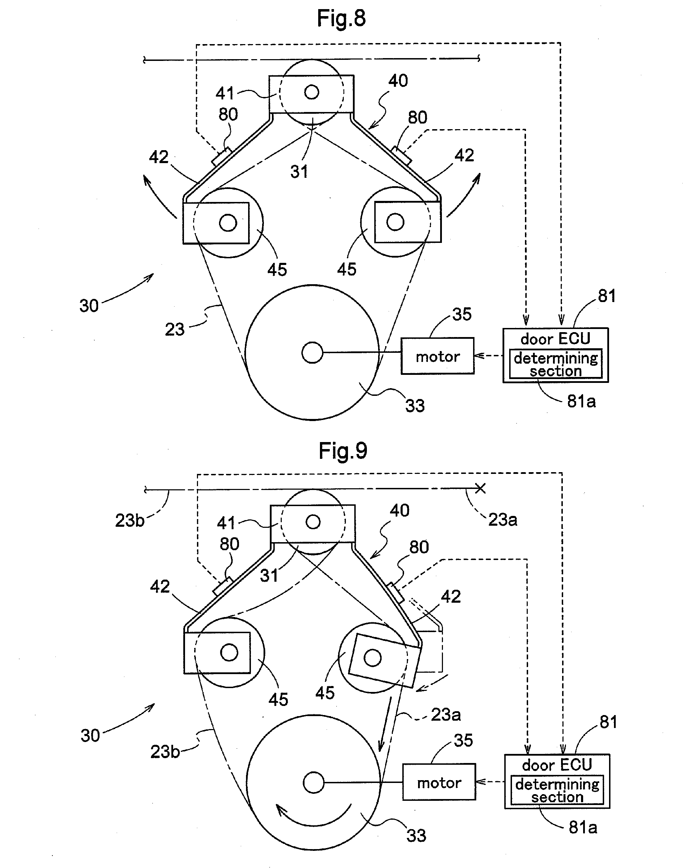

Opening/closing operations of the sliding door 2 are effected by the drive unit 30. Fig. 4 is a perspective view of this drive unit 30 and Fig. 5 is its front view. Further, Fig. 6 and Fig. 7 are sections taken along VI-VI and VII-VII in Fig. 5, respectively. This drive unit 30 includes a drive mechanism 32 and a guide pulley 31. These are affixed to a base plate 36, and are all covered within a unit case 37, except for a motor 35 which will be described later. Incidentally, Fig. 8 schematically shows the drive unit 30 in Fig. 5.

The drive mechanism 32 includes a drive wheel 33 about which the cable 23 is wound, and the motor 35 for moving the cable 23 back and forth by rotatably driving the drive wheel 33. The drive wheel 33 is formed as a cylindrical member whose outer peripheral face defines an engaging groove 34. This engaging groove 34 is a groove configured to engage successive lengths of the cable 23, and the cable 23 is wound around the drive wheel 33 along the engaging groove 34.

The guide pulley 31 is configured to guide the cable 23 extending from the sliding door 2 and to further guide the length of the cable 23 past the drive wheel 33 back to the sliding door 2. Therefore, this guide pulley 31 corresponds to what is referred to as "a guide member" in the present invention. The guide pulley 31 includes a groove for engagement with a length of the cable 23 (referred to as the "pulling-in cable hereinafter) to be pulled in from the outer peripheral surface of the drive wheel 33 toward the sliding door 2 and a further groove for engagement with a further length of the cable 23 to be paid out from the outer peripheral surface of the drive wheel 33 toward the siding door 2 side (referred to as the "paying-out cable" hereinafter). The guide pulley 31 is pivotally mounted to and between the base plate 36 and a pulley cover 41. Therefore, this pulley cover 41 corresponds to what is referred to as the "support member" in the present invention. Incidentally, with switchover of the rotational direction of the drive wheel, the pulling-in cable will be "paid out" and the paying-out cable will be "pulled in". However, for the sake of the simplicity of explanation of the present invention, one is referred to as the pulling-in cable and the other is referred to as the paying-out cable.

The motor 35 is controlled by a door ECU 81 (see Fig. 8) and rotatable in either the forward or reverse direction. The door ECU 81, in response to various kinds of input signals from the vehicle such as an ON/OFF signal from an opening/closing switch of the sliding door 2, outputs a drive signal to the motor 35 so as to cause the motor to rotate in the desired direction based on such signals. When the motor 35 is rotated in one direction, the drive wheel 33 too is rotated in the corresponding direction, so that e.g. the cable 23 will be wound in the door closing direction to close the sliding door 2. On the other hand, when the motor 35 is rotated in the reverse direction, the drive wheel 33 too will be rotated in reverse to open the sliding door 2. In this way, upon activation of the drive mechanism 32, its drive force will be transmitted to the sliding door 2 via the cable 23, whereby the sliding door 2 is driven. Incidentally, the motor 35 that is disposed outside the unit case 37 is not shown in Figs. 3-5.

The vehicle door opening/closing apparatus 10 includes the cable 23 retained to the sliding door 2 for opening/closing this sliding door 2, the drive wheel 33, and further includes the drive mechanism 32 for moving the cable 32 back and forth and the guide member for guiding the cable 23 extending from the sliding door 2 to the drive wheel 33 and further guiding the length of the cable 23 past the drive wheel 33 back to the sliding door 2. The apparatus 10 further includes a tension mechanism 40 for applying a predetermined tension to the cable 23. With this tension mechanism 40, there is realized a non-slacked condition of the cable 23, so that a pulling-in operation or paying-out operation of the cable 23 relative to the drive wheel 33 is effected.

The tension mechanism 40 includes blade springs 42 (each of which corresponds to "a tension applying member" in the present invention) that are affixed to the pulley cover 41 and that are elastically deformable.

In the instant embodiment, the pulley cover 41 is disposed so as to cover the guide pulley 31 along the right/left direction of the drive unit 30 and the cover 41 is affixed, at its opposed ends, to the base plate 36. On the other hand, the upper and lower sides of the pulley cover 41 relative to the vehicle 1 are open, so that the cable 23 is installed through these opened sides.

To the inner side faces of the pulley cover 41, the blade springs 42 are affixed at the respect one end thereof. As the blade springs 42 are affixed to the lateral faces of the pulley cover 41, in the instant embodiment, the blade springs 42 are located on the outer side of the cable 23 wound around and between the guide pulley 31 and the drive wheel 33. Each blade spring 42 is bent from its lower portion to the outer side and is bent again at the end opposite to the fixed end side (this will be referred to as the "free end side" hereinafter). At the end of the free end side, a pair of opposed support plates 44 parallel to each other are formed inwardly and integrally with a main plate 43 constituting the blade spring 42. And, between these support plates 44, a tension pulley 45 (corresponding to "a guide wheel" in the present invention) is supported to be rotatable. To these tension pulleys 45, the pulling-in cable is engaged with one of them and the paying-out cable is engaged with the other of them.

When the cable 23 retained to the sliding door 2 and forming a loop around and across the fixed pulley 21, the guide pulley 31 and the drive wheel 33 is engaged with the tension pulley 45, the blade spring 42 corresponding thereto will be displaced to the inner side relative to its natural state. That is, the two blade springs 42 will be displaced in the mutually approaching direction. So, the cable 23 will be subjected to an elastic force corresponding to the amount of this displacement of the blade springs 42. Hence, as shown by arrows in Fig. 8, via the tension pulleys 45, an outwardly oriented tension will be applied to the cable 34. In this way, each blade spring 42 applies a tension to the cable 23 by an elastic deformation of its own.

According to the tension mechanism 40 of the vehicle door opening/closing apparatus relating to the instant embodiment, as the blade springs 42 apply the outwardly oriented tension to the cable 23, the tension of the cable 23 can be maintained appropriately and slackness thereof can be prevented. Also, as the blade springs 42 are affixed to the pulley cover 41 which pivotally supports the guide pulley 31, when the tension mechanism 40 is to be assembled with the drive unit 30, there is no need for any special positioning, so the assembly can be effected easily. Further, by displacing the blade spring 42 in the direction reducing the tension of the cable 23, the initial tension at the time of the installment of the cable 23 can be adjusted very easily. And, the mechanism for adjustment of initial tension can be integrated with the mechanism for maintaining the tension of the cable 23 appropriate. So, the number of the components can be reduced and the production cost can be reduced correspondingly. Further, as each tension pulley 45 is pivotally supported by the opposed pair of support plates 44, it is possible to render the thickness of the entire drive unit 30 substantially equal to the thickness of the tension pulley 45. As a result, the entire apparatus can be formed thin.

Further, as shown in Fig. 4 and Fig. 8, at a portion of the blade spring 42 substantially midway between its portion affixed to the pulley cover 41 and the guide pulley 31, a strain gauge 80 is provided. This strain gauge 80 is fixed to the planar portion of the blade spring 42 on the reverse side (external side) of its face opposed to the cable. The strain gauge 80 comprises a sensor for detecting a minute amount of expansion/contraction of a metal foil or a metal wire of e.g. CuNi, etc., as a change in electric resistance. This strain gauge 80 is provided on each one of the blade springs 42 on the pulling-in cable side and the paying-out cable side, for detecting elastic deformation of the blade spring 42 corresponding thereto. Incidentally, the attaching position of the strain gauge 80 is not limited to the above. This can be any position where elastic deformation of the blade spring 42 can be detected.
Further, the strain gauge 80 is electrically connected to the door ECU 81 for controlling drive of the motor 35, so that an electric signal (change in the resistance value) from the strain gauge 80 is inputted to the door ECU 81. The door ECU 81 includes a determining section 81a for determining presence/absence of foreign object entrapment by the sliding door 2, based on the electric signal from the strain gauge 80.

As shown in Fig. 9, when the sliding door 2 (see Fig 1) has entrapped a foreign object, this will cause change in the sliding resistance of the sliding door 2, or the sliding door 2 will be stopped completely. Therefore, when the drive wheel 33 attempts to pull in the pulling-in cable 23a, but, cannot do so, hence, the tension on the pulling-in cable 23a will increase. On the other hand, the paying-out cable 23b will be slackened, and the tension on this paying-out cable 23b will be decreased. Then, the blade spring 42 on the side of the pulling-in cable under the increased tension will be displaced inward, as compared with its state during normal operation of the sliding door 2, thus reducing the path length of the pulling-in cable 23a.

As the blade spring 42 is displaced in association with the displacement, the strain gauge 80 will be deformed according to this displacement, and the gauge 80 will output an electric signal (change in the resistance value) corresponding to this deformation and this signal is inputted to the door ECU 81. Though not shown, it may be possible to amplify the electric signal from the strain gauge 80 by an amplifier and then input this amplified signal to the door ECU 81.

The determining section 81a provided in the door ECU 81 is configured to determine presence/absence of foreign object entrapment by the sliding door 2 based on the inputted electric signal. If it is determined the sliding door 2 has entrapped a foreign object, then, the door ECU 81 outputs a drive signal to the motor 35 for stopping/reverse-driving this motor 35. The method of this entrapment determination is not particularly limited in the present invention. For instance, presence of entrapment can be determined when the amount of change in the resistance value as the electric signal from the strain gauge 80 exceeds a predetermined value. Further, alternatively, the presence of entrapment can be determined if the state of the change amount in the resistance value exceeding a predetermined value being continued for more than a predetermined period.

According to this embodiment, by providing the blade spring 42 with the strain gauge 80 for detecting its elastic deformation, entrapment of foreign object can be detected in a reliable manner based on a change in the tension of the cable 23, regardless of the position of occurrence of the entrapment. Further, as the blade spring 42 is provided inside the drive unit 30 for the original purpose of applying a tension to the cable 23, and only by providing this blade spring 42 with the strain gauge 80, there can be provided the mechanism for detecting entrapment. Therefore, the number of components can be reduced and the apparatus can be formed compact.
Further, since the blade spring 42 is affixed to the pulley cover 41 which supports the guide pulley 31, the positioning can be effected reliably and the tension of the cable 23 can be set to a desired value. Consequently, change in the tension due to foreign object entrapment becomes distinct so the entrapment can be detected in a reliable manner.

### [Second Embodiment]

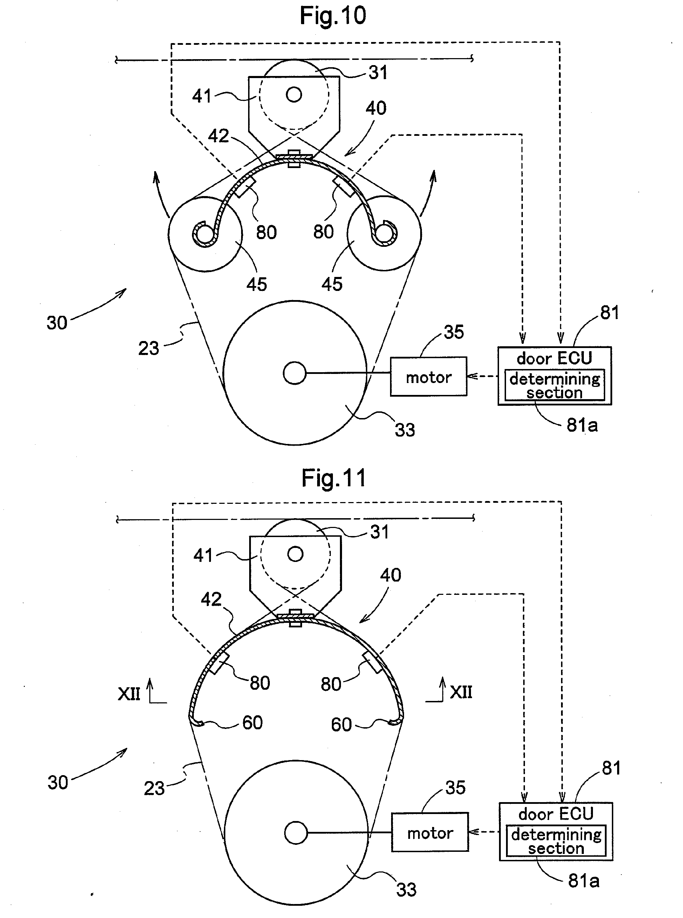

Next, a second embodiment of the present invention will be described with reference to the drawings. Fig. 10 is a schematic view showing a drive unit 30 relating to this embodiment. As shown in this figure, a tension mechanism 40 included in this drive unit 30 also includes a blade spring 42 that is affixed to the pulley cove 41 supporting the guide pulley 31 and that is elastically deformable and this blade spring 42 is provided with the strain gauge 80. This embodiment differs, however, in the shape of the pulley cover 41, the fixed position of the blade spring 42 and the attached position of the strain gauge 80. Next, these differences will be explained.

In this embodiment, the pulley cover 41 is configured to cover the guide pulley 31 not only in the right/left direction, but also on the lower side thereof. In this, in order to allow the pulling-in and paying-out of the cable 23 to proceed appropriately without being hindered by the pulley cover 41, the lower end of the pulley cover 41 is affixed to the base plate 36 on the inner side of the cable 23 wound around and between the guide pulley 31 and the drive wheel 33 and an opening is provided at the area where the cable 23 is caused to pass.

In the instant embodiment, to the lower end face of the pulley cover 41, a single blade spring 42 is affixed at its substantially center point thereof. And, at opposed ends on the free end sides of the blade spring 42, there are rotatably mounted tension pulleys 45. Of these tension pulleys 45, the pulling-in cable is engaged with one of them and the paying-out cable is engaged with the other of the same. And, on the reverse side (external side) of the blade spring 42 opposite to its face opposed to the cable, strain gauges 80 are provided. In this embodiment too, the strain gauges 80 are provided one on the pulling-in cable side and one on the paying-out side.

When the cable 23 engages the tension pulleys 45, the blade spring 42 is displaced inward as compared with its natural state, i.e. in the direction of the opposed free ends of the signal blade spring 42 approaching each other. Therefore, as the cable 23 is subjected to an elastic force of the blade spring 42 corresponding in its amount to the amount of displacement thereof, so, as indicated by arrows in Fig. 10, an outwardly oriented tension will be applied to the cable 23 via the tension pulleys 45. Further, when the tension of the pulling-in cable is increased due to foreign object entrapment, this causes inward displacement of the free end on the pulling-in cable side of the blade spring 42. Therefore, through detection of the elastic deformation of the blade spring 42 associated with this displacement, foreign object entrapment is detected.

According to the tension mechanism 40 of the vehicle door opening/closing apparatus 10 relating to the instant embodiment, from the inner side of the cable 23 wound around and between the guide pulley 31 and the drive wheel 33, an outwardly oriented tension can be applied reliably to the cable 23 via the blade spring 42 and the tension pulleys 45. In this, since the tension pulley 45 is pivotally supported, smooth back and forth movements of the cable 23 are possible with application of a predetermined tension thereto. Further, since all of the blade spring 42 and the tension pulleys 42 pivotally supported thereto can be confined on the inner side of the cable 23, by affixing the blade spring 42 with displacement thereof in the direction for reducing the tension of the cable 23, the cable 23 can be installed easily by hooking the slackened cable 23 about the periphery of the blade spring 42. Moreover, the blade spring 42 and the tension pulleys 45, the strain gauges 80 provided continuously therewith can all be confined on the inner side of the cable 23 in the form of loop. Therefore, the apparatus can be formed even more compact.

### [Third Embodiment]

Next, a third embodiment of the present invention will be described with reference to the drawings. Fig. 11 is a schematic view of a drive unit 30 relating to this embodiment. The construction of a tension mechanism 40 provided in this drive unit 30 is substantially identical to that of the tension mechanism 40 described in the second embodiment above, but differs in the construction of the terminal ends on the free end sides of the blade spring 42. Next, this difference will be described.

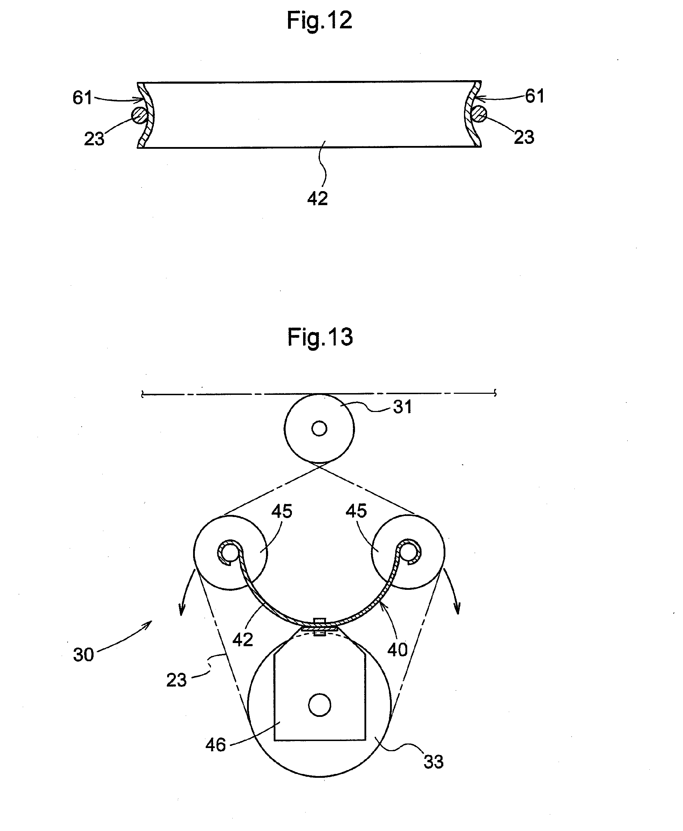

In the instant embodiment, the terminal ends on the free end sides of the blade spring 42, no tension pulleys 45 are provided. Instead, the cable 23 is directly engaged with the blade spring 42. In this, the terminal ends on the free end sides of the blade spring 42. there are formed curved portions 60 which are curved inwards, that is, in the opposite direction to the tension applying direction. Further, as shown in Fig. 12, on the outer side of the curved portion 60, there is formed a guide groove 61 for guiding the cable 23. In operation, when the drive wheel 33 is rotated to pull in or pay out a length of the cable 23, the cable 23 is caused to slide on the surface of the blade spring 42 along the guide groove 61.

According to the tension mechanism 40 of the vehicle door opening/closing apparatus 10 relating to the instant embodiment, on the outer side of the curved portion 60, the guide groove 61 for guiding the cable 23 is provided. Hence, the cable 23 is caused to slide along the guide groove 61, with application of appropriate tension on the cable 23 by the blade spring 42, and the cable 23 can be guided appropriately between the guide pulley 31 and the outer peripheral face of the drive wheel 33. In this, since the curved portion 60 is curved inwards, it is possible to restrict occurrence of inadvertent hooking of the paying-out cable to the end of the blade spring 42. In this way, through ingenious designing of the shape fo the blade spring 42, the pulling-out and paying-out operations of the cable can be carried out appropriately without using the tension pulleys 45 or the like, so even further reduction in the number of components is made possible, and the production cost can be reduced correspondingly, and the apparatus can be formed even more compact.

### {Other Embodiments}

(1) In the second embodiment and the third embodiment described above, there were explained the exemplary constructions wherein a single blade spring 42 is affixed, at its substantially mid point, to the pulley cover 41, thereby to constitute the tension mechanism 40. However, the mechanism can also be constructed by affixing two blade springs 42, at the respective one-side ends thereof, to the pulley cover 41.

(2) In the respective foregoing embodiments, there were explained the examples wherein the blade spring(s) 42 is (are) affixed to the pulley cover 41 supporting the guide pulleys 45. However, the same advantageous effect can be achieved also in the case of an alternative construction shown in Fig. 13 wherein the blade spring 42 is affixed to drive wheel cover 46 supporting the drive wheel 33. In this case, the number of the blade spring(s) 42, its (their) affixed position(s), the presence/absence of the guide pulleys 45, etc. can be appropriately selected.

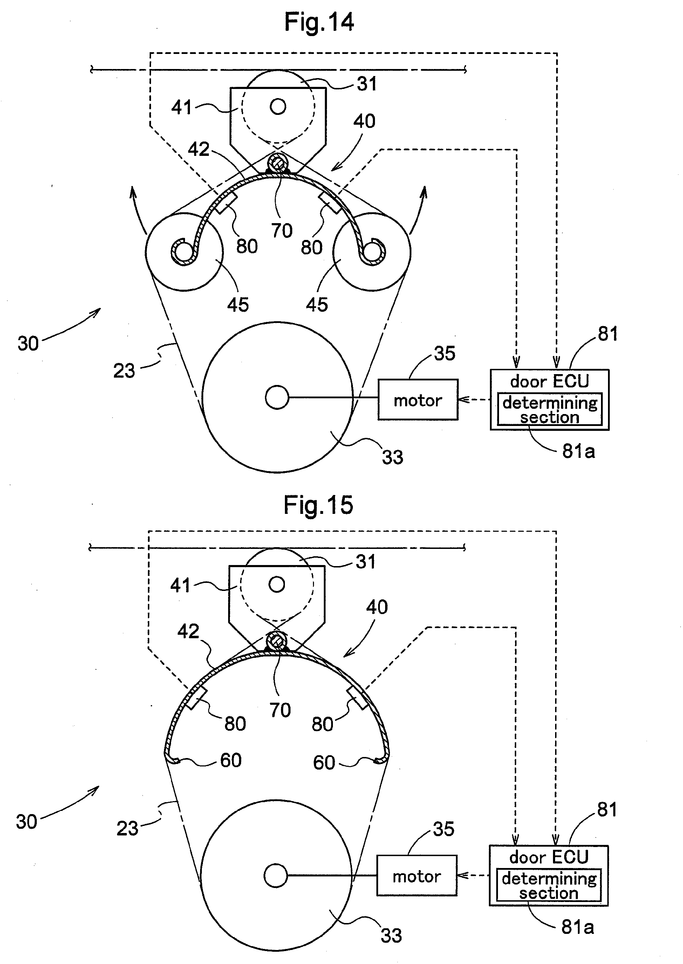

(3) In the second embodiment and the third embodiment described above, there were explained the examples wherein a single blade spring 42 is completely affixed to the pulley cover 41. However, as shown in Figs. 14 and 15, in these examples, the blade spring 42 may be pivoted in at its midpoint in the direction parallel to the rotational shaft of the guide pulley 3, so that the spring may be pivotable.
With this construction, when the drive wheel 33 is rotated, the tension transmitted from the pulling-in cable to the blade spring 42 causes this blade spring 42 as a whole to be pushed about the pivot shaft 70 toward the paying-out cable and this pushing-out movement applies a tension to the paying-out cable. In this case, advantageously, any difference between the tension due to the push-out action and the appropriate tension required for the paying-out cable will be absorbed by the elasticity of the blade spring 42 and the tension will be applied in a reliable manner to the cable 23 so as not to cause any slackness therein.
Further, with the above-described construction, when the tension of the pulling-in cable is increased in association with rotational drive of the drive wheel 33, the tension transmitted form the pulling-cable to the blade spring 42 causes this blade spring 42 to pivot about the supported portion toward the paying-out cable. With this pivotal motion, a tension is applied also to the paying-out cable and difference between the tension of the pulling-in cable and the tension of the paying-out cable can be absorbed by the pivotal motion of the blade spring 42. In this way, the tension difference between the cable portions during a normal operation of the sliding door 2 can be absorbed by a pivotal motion of the blade spring 42. On the other hand, when the tension of the pulling-in cable is further increased due to entrapment of a foreign object, this causes increase in the tension difference between the two cable portions 23, so that this foreign object entrapment can be detected. In this way, with the arrangement of pivotally supporting the blade spring 42, the elastic deformation of the blade spring 42 during a normal operation of the sliding door 2 can be restricted, whereby foreign object detection can be detected even more reliably.

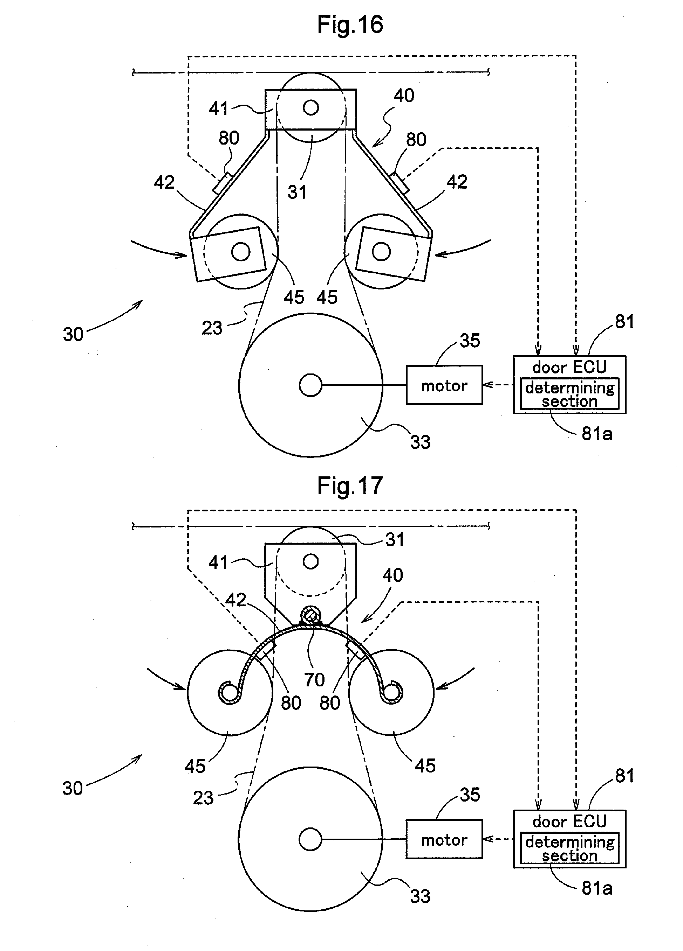

(4) In the foregoing embodiments, there were explained the examples wherein the blade spring 42 urges the pulling-in cable and/or the paying-out cable to the outer side. However, as shown in Fig. 16 and Fig. 17, in the foregoing embodiments, the blade spring 42 may be configured to urge the pulling-in cable and/or the paying-out cable to the inner side.
Fig. 16 shows an example wherein the blade spring 42 is affixed on the outer side of the cable 23. Fig.17 shows an example wherein the blade spring 42 is affixed on the inner side of the cable 23.
With these arrangements, as the pulling-in cable and the paying-out cable are urged inwards, the amount (length) of the cable 23 wound around the drive wheel 33 is increased. Accordingly, slippage of the cable 23 can be effectively prevented, so that the pulling-in and paying-out operations of the cable 23 can proceed in a reliable manner.
Further, if the blade spring 42 is affixed on the inner side of the cable 23 as shown in Fig. 17, the apparatus can be formed even more compact.

### Industrial Applicability

The vehicle opening/closing body driving apparatus relating to the present invention may be used not only with a sliding door of a vehicle, but also for driving any other opening/closing body than the sliding door, e.g. for driving such opening/closing bodies as a rear door of a vehicle such as a bag door or a luggage door, a sunroof of the vehicle, etc.

## Claims

1. A driving apparatus for an opening/closing body in a vehicle relating to the present invention, the apparatus comprises:
a cable retained to the opening/closing body of the vehicle for opening/closing this opening/closing body;
a drive wheel;
a drive mechanism for moving the cable back and forth;
a guide member for guiding the cable extending from the opening/closing body to the drive wheel and further guiding the cable past the drive wheel back to the opening/closing body;
a support member for supporting either the guide member or the drive wheel; and
a tension applying member affixed to the support member and configured to apply a tension to the cable.

2. The vehicle opening/closing body driving apparatus according to claim 1, wherein the tension applying member comprises a blade spring.

3. The vehicle opening/closing body driving apparatus according to claim 2, wherein the blade spring is affixed on the inner side of the cable wound about the guide member and the drive wheel, so as to urge the cable to the outer side.

4. The vehicle opening/closing body driving apparatus according to claim 3, wherein at an end of the blade spring to which end the support member is not affixed, there is pivotally supported a tension pulley for guiding the cable.

5. The vehicle opening/closing body driving apparatus according to claim 3, wherein at an end of the blade spring to which end the support member is not affixed, there is formed a curved portion which is curved in the direction opposite to the tension applying direction, and on the outer side of the curved portion, there is formed a guide groove for guiding the cable to the outer side of the curved portion.

6. The vehicle opening/closing body driving apparatus according to claim 1, further comprising a strain gauge included in the tension applying member and configured to detect deformation of this tension applying member.

7. The vehicle opening/closing body driving apparatus according to claim 6, wherein the tension applying member includes a blade spring supported to a support member that supports either the guide member or the drive wheel, the blade spring being configured to apply tension to a pulling-in cable pulled in to the drive wheel and a paying-out cable paid out from the drive wheel.

8. The vehicle opening/closing body driving apparatus according to claim 7, wherein the blade spring is supported on the inner side of the cable wound around and between the guide member and the drive wheel.

9. The vehicle opening/closing body driving apparatus according to claim 7 or 8, wherein the blade spring is configured to urge the pulling-in cable and the paying-out cable to the outer or inner side.

10. The vehicle opening/closing body driving apparatus according to any one of claims 7-9, wherein at an end of the blade spring, there is provided a guide wheel for urging and contacting the cable to guide this cable.

11. The vehicle opening/closing body driving apparatus according to claim 8, wherein at an end of the blade spring, there is formed a curved portion which is curved in the direction opposite to the tension applying direction, and on the outer side of the curved portion, there is formed a guide groove for guiding the cable to the outer side of the curved portion.

12. The vehicle opening/closing body driving apparatus according to any one of claims 8-11, wherein the blade spring is pivotally supported.
